(19) Europäisches Patentamt
European Patent Office
Office européen des brevets

(11) EP 2 273 006 A1

# (12) EUROPEAN PATENT APPLICATION

(43) Date of publication:
**12.01.2011 Bulletin 2011/02**

(51) Int Cl.:
***D06L 3/02*** *(2006.01)* ***C11D 3/39*** *(2006.01)*
***D21C 9/10*** *(2006.01)*

(21) Application number: **09162913.9**

(22) Date of filing: **17.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Unilever PLC**
**100 Victoria Embankment**
**London EC4Y 0DY (GB)**

(72) Inventor: **The designation of the inventor has not yet been filed**

(74) Representative: **McNab, Donald C. et al**
**Marks & Clerk LLP**
**Glasgow Office**
**120 Bothwell Street,**
**Glasgow G2 7JS (GB)**

## (54) Bleaching of substrates

(57) The present invention concerns the treatment of substrates with a ligand with a manganese salt or a preformed transition metal catalyst.

EP 2 273 006 A1

## Description

## Field of Invention

The present invention relates to the catalytic oxidation and/or bleaching of substrates.

## Background of Invention

United States Patents 5,516,738 and 5,329,024 disclose the use of a manganese transition metal catalyst of 1,4,7-Trimethyl-1,4,7-triazacyclononane ($Me_3$-TACN) for epoxidizing olefins; the transition metal catalyst has as a non-coordinating counter ion $ClO_4^-$. United States Patents 5,329,024 also discloses the use of the free $Me_3$-TACN ligand together with manganese chloride in epoxidizing olefins.
WO 2002/088063, to Lonza AG, discloses a process for the production of ketones using $PF_6^-$ salts of manganese $Me_3$-TACN.
WO 2005/033070, to BASF, discloses the addition of an aqueous solution of Mn(II)acetate to an aqueous solution of $Me_3$-TACN followed by addition of a organic substrate followed by addition of hydrogen peroxide.
W02006/125517 discloses the use of manganese complexes with 1,4,7-Trimethyl-1,4,7-triazacyclononane ($Me_3$-TACN) and 1,2-bis-(4,7-dimethyl-1,4,7-triazacyclonon-1-yl)-ethane ($Me_4$-DTNE) as highly-water soluble salts in bleaching.
WO08086937 and EP1934396B both disclose oxidative/bleaching processes with manganese complexes with 1,4,7-Trimethyl-1,4,7-triazacyclononane ($Me_3$-TACN) and 1,2-bis-(4,7-dimethyl-1,4,7-triazacyclonon-1-yl)-ethane ($Me_4$-DTNE) salts.
R. Hage et al. in Nature, 369, 637 (1994) teaches the optimal use of manganese complexes containing $Me_3$-TACN to be at around pH 10.0-10.5 and for the manganese complex containing $Me_4$-DTNE to be at around pH 11.0

## Summary of Invention

The present method provides a method of bleaching of cellulosic substrates, of treatment of effluent waste streams, removal of starches and polyphenolic substrates from hard surfaces, modification of starch, oxidations of alkenes into epoxides and/or diols and/or dicarboxylic acids, alcohol into aldehyde and/or carboxylic acids, alkanes into alcohols and ketones.
We have found that by using a free ligand with a manganese salt or a preformed manganese transition metal catalyst at a high pH permits effective bleaching such that levels of the free ligand or preformed manganese transition metal catalyst may be kept at a minimum.
In one aspect the present invention provides a method of treating a substrate comprising the following step:

contacting the substrate with an aqueous medium, having at least 1% of water and from 1 to 1500 mM of hydrogen peroxide, to form an oxidative medium, the aqueous medium comprising a ligand of the following form:

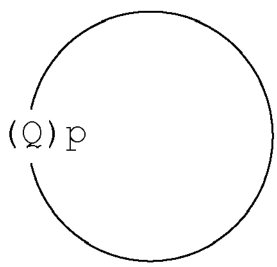

(I)

,

wherein:

Q = 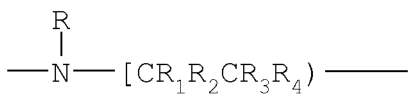 ;

p is 3;
R is independently selected from: hydrogen, C1-C6-alkyl, CH2CH2OH, and CH2COOH;
R1, R2, R3, and R4 are independently selected from: H, C1-C4-alkyl, and C1-C4-alkylhydroxy, wherein the oxidative medium has a pH in the range 11 to 13 and the concentration of the ligand is in the range from 0.001 and 5 micromol/l.

The ligand may be a single ligand or a mixture of the ligands as defined above.

## Detailed Description of the Invention

### Transition Metal Catalyst

It is preferred that a preformed transition metal catalyst is added. However, a precursor for the transition metal catalyst may be used instead. The precursor is the free ligand that may be added which complexes *in situ* with adventitious Mn ions but if the free ligand is employed it preferred that Mn ions are provided by the addition of manganese salts, e.g., manganese(II)chloride, manganese(II) sulphate or manganese [(II) or (III)] acetate. The free ligand can be provided as pure ligand, or in its protonated form as chloride, sulphate, nitrate, acetate salts, for example. The most preferred ligand that can be employed this way is 1,4,7-trimethyl-1,4,7-triazacyclononane.

The manganese transition metal catalyst used may be non-deliquescent by using counter ions such as $PF_6^-$ or $ClO_4^-$, it is preferred for industrial substrates that the transition metal complex is water soluble. It is preferred that the preformed transition metal is in the form of a salt such that it has a water solubility of at least 50 g/l at 20 °C. Preferred salts are those of chloride, acetate, sulphate, and nitrate. These salts are described in WO 2006/125517.

Preferably, R1, R2, R3, and R4 are independently selected from: H and Me. Most preferably, the catalyst is derived from the ligand selected from the group consisting 1,4,7-Trimethyl-1,4,7-triazacyclononane ($Me_3$-TACN).

The ligand 1,4,7-Trimethyl-1,4,7-triazacyclononane ($Me_3$-TACN) is further preferably present as a manganese transition metal complex, even more preferably as the $PF_6^-$, acetate or sulphate salt.

The preformed transition metal catalyst salt is preferably a dinuclear Mn(III) or Mn(IV) complex with at least one $O^{2-}$ bridge.

When used as the free ligand is it preferred that the manganese salt is a present in the aqueous medium at a molar ratio of ligand to manganese ion present in the salt of between 100:1 and 0.1:1, and between 10:1 and 0.5: 1 being more preferred and between 3:1 and 1:1 as being most preferred.

Preferred manganese salts are those of sulphate, chloride, and acetate.

Preferably, the pH of the oxidative medium is from pH 11.2 to 12.8, more preferably from pH 11.5 and 12.5.

Preferably, the concentration of the ligand is from 0.002 to 2 micromol/l, more preferably from 0.005 and 1 micromol/l.

The ligand may be present as the free ligand together with a manganese salt or the ligand is present as a preformed transition metal catalyst. More preferred the ligand is present as a preformed transition metal catalyst.

### Substrates

Cellulosic substrates are found widely in domestic laundry, industrial and institutional laundry, wood-pulp, cotton processing industries and the like. Although target cleaning can be different, it is the objective in all cases to bleach these substrate, i.e., either removing undesired stains or solids (laundry applications), or bleaching polyphenolic substrates that are present in the natural cotton materials (raw cotton and wood pulp).

For laundry (both domestic as well as institutional & industrial cleaning), bleaching agents are used for cleaning and hygiene purposes. Especially hydrogen peroxide and peracids are being employed widely. As highlighted above, hydrogen peroxide can be activated by catalysts to allow cleaning at lower bleaching temperatures.

The term "crockery" encompasses plates, dishes and other eating (e.g., cutlery) and serving tableware, usually made of some ceramic material; crocks, earthenware vessels, especially domestic utensils.

**Synthetic Applications**

Although not limited, examples include alkene oxidations into epoxide, cis-diol, trans-diol (formed from the epoxide upon alkaline hydrolysis), and via C-C cleavage into the carboxylic acid. Examples (but not limited to these examples) of alkenes to give epoxide include cyclooctene conversions, styrene, 1-octene, dimethylmaleate. It should be noted that, as persons skilled in the art will appreciate, that these epoxides may be hydrolysed into trans-diol groups.
In this regard, alkenes, aldehydes, and alkanes are preferred substrates and it is preferred that when these substrates are oxidised they are present (including isomers and enantiomers) at least 90 % purity; this level of purity does not include the oxidative medium.
This invention is supported by the following non-limiting examples.

**Experimental**

**Experiment 1:**

Bleaching of pulp with very low levels of catalyst ($[Mn_2(\mu\text{-}O)_3(Me_3\text{-}TACN)_2](PF_6)_2.H_2O$.
$[Mn_2(\mu\text{-}O)_3(Me_3tacn)_2](PF_6)_2.H_2O$ was obtained as disclosed elsewhere (EP 458397). $[Mn2(\mu\text{-}O)_3(Me_3\text{-}TACN)_2](CH_3COO)_2$ (as 3.5% aqueous solution) was obtained as disclosed elsewhere (W02006/125517).
D0 eucalyptus hardwood pulp with a starting ISO-brightness of 60 was treated as follows: 1 g of oven-dry pulp was added to a series of mini-bottles containing various levels of catalyst, 8 kg/t $H_2O_2$ (equals to 11.76 mM $H_2O_2$), the pH-value adjusted to desired level.
Note 1: D0 pulp means that this has been partly delignified/ bleached by a $ClO_2$ step before.
Note 2: In practice, pulp was used that contained 20.7% dry matter and 79.3% water (20.7% dry content). Therefore 4.83 g of 'wet' pulp was used for each experiment.
Note 3: All experiments were carried out at 5% consistency.
The mini-bottles are put in a pre-heated water bath (69.5 °C) for 1 hour and are shaken throughout the bleaching process. Subsequently the pulp mixture is filtrated through a Buchner funnel, washed with copious amounts of demineralised water and dried in a rapid dryer at ± 105°C (Lorentzen and Wettre) for 6 minutes. The optical properties of the pulp heaps were then measured using a Minolta spectrophotometer CM-3700d, using L, a, b values which are converted to whiteness values through the following formula:

$$100 - \sqrt{(100-L)^2 + a^2 + b^2}$$

The ISO-Brightness values are calculated through the following formula: ISO-Brightness = (1.98 = whiteness)-100.3.
The results of the experiment are given in Tables 1 and 2

**Table 1**

| ISO-Brightness results of bleaching eucalyptus D0 pulp using various levels of $[Mn_2(\mu\text{-}O)_3(Me_3\text{-}TACN)_2](PF_6)_2.H_2O$ at various pH's at 66°C for 60 minutes. | | |
|---|---|---|
| **pH** | **$[Mn_2(\mu\text{-}O)_3(Me_3\text{-}TACN)_2](PF_6)_2.H_2O$ (micromolar)** | **Brightness (ISO %)** |
| 9.0 | 0 (blank) | 66.7 |
| 9.0 | 0.1 | 67.2 |
| 9.0 | 0.6 | 67.2 |
| 9.0 | 2.4 | 67.5 |
| 9.0 | 10 | 68.3 |
| 9.0 | 20 | 69.7 |
| 10.2 | 0 (blank) | 70.7 |

(continued)

| ISO-Brightness results of bleaching eucalyptus D0 pulp using various levels of $[Mn_2(\mu\text{-}O)_3(Me_3\text{-}TACN)_2](PF_6)_2.H_2O$ at various pH's at 66°C for 60 minutes. | | |
|---|---|---|
| **pH** | **$[Mn_2(\mu\text{-}O)_3(Me_3\text{-}TACN)_2](PF_6)_2.H_2O$ (micromolar)** | **Brightness (ISO %)** |
| 10.2 | 0.3 | 71.0 |
| 10.2 | 1.2 | 70.8 |
| 10.2 | 2.4 | 73.3 |
| 10.2 | 5 | 75.2 |
| 10.2 | 10 | 74.9 |
| 10.2 | 20 | 73.2 |
| 11.0 | 0 (blank) | 73.7 |
| 11.0 | 0.3 | 74.6 |
| 11.0 | 1.2 | 75.4 |
| 11.0 | 2.4 | 76.7 |
| 11.0 | 10.2 | 74.2 |
| 11.0 | 20 | 72.3 |
| 11.5 | 0 (blank) | 76.3 |
| 11.5 | 0.3 | 77.8 |
| 11.5 | 0.6 | 78.1 |
| 11.5 | 1.2 | 77.0 |
| 11.5 | 5 | 74.7 |
| 11.5 | 10 | 72.9 |
| 12.1 | 0 (blank) | 76.0 |
| 12.1 | 0.1 | 76.8 |
| 12.1 | 0.3 | 78.5 |
| 12.1 | 0.6 | 77.7 |
| 12.1 | 1.2 | 75.5 |
| 12.1 | 5 | 72.4 |
| 12.1 | 10 | 71.3 |

The results shown in Table 1 show the following:

1. $[Mn2(\mu\text{-}O)_3(Me_3\text{-}TACN)_2](PF_6)_2.H_2O$ gives optimal bleaching activity using relatively high levels at pH 9-11 (20 microM at pH 9; 5 microM at pH 10.2; 2.4 microM at pH 11.0)

2. At higher pH (11.5 and 12.1) the bleaching activity is optimal at much lower levels of catalyst (0.6 microM at pH 11.5 and 0.3 microM at pH 12.1)

3. The Brightness values at high pH at low levels of catalyst are much higher than at low pH with low levels of catalyst.

**Experiment 2:**

Raw cotton with a Berger Whiteness value of 5.5 +/-1.0 was treated as follows: 2 grams of the cotton was immersed into mini-bottles containing a 20 ml solution (cloth/liquor ratio of 1/10) containing various levels of $[Mn_2(\mu\text{-}O)_3$

$(Me_3$-TACN$)_2](CH_3COO)_2$, 75 mM $H_2O_2$ (equals to 6.66 ml (35%)/l; w/w wrt cotton), 0.9 g/l DTPMP (Diethylenetriaminepenta(methylene-phosphonic acid) - (ex Solutia; trade name Dequest 2066; purity is 32%), pH-value adjusted to desired level, 1 g/l Sandoclean PCJ (ex Clariant).

The mini-bottles were put in a pre-heated water bath (77°C) for 30 minutes (the temperature of the bleaching solutions in the bottles is then 75 °C). Subsequently the cotton swatches were rinsed twice with 1 litre of hot demineralised water (95 °C), then with 1 litre of 40°C demineralised water containing 1 ml/l acetic acid and then washed with copious amounts of demineralised water and dried overnight under ambient conditions. The optical properties of the cloths were then measured using a Minolta spectrophotometer CM-3700d, using X, Y, Z values which are converted to Berger Whiteness values.1

The values of the whiteness is expressed in Berger units. The formula of Berger whiteness is given below:

$$W_{berger} = Y + a.Z - b.X, \text{ where } a = 3.448 \text{ and } b = 3.904.$$

The values X, Y, Z are the coordinates of the achromatic point. The results of the experiments are given in Table 2 below.

**Table 2**

| Berger Whiteness results of bleaching raw cotton using various levels of $[Mn_2(\mu\text{-}O)_3(Me_3\text{-}TACN)_2](CH_3COO)_2$ at various pH's at 75°C for 30 minutes. | | |
|---|---|---|
| **pH** | **$[Mn_2(\mu\text{-}O)_3(Me_3\text{-}TACN)_2](CH_3COO)_2$ (micromolar)** | **Whiteness (Berger)** |
| 10.5 | 0 (blank) | 49.8 |
| 10.5 | 2.0 | 53.7 |
| 10.5 | 5.0 | 56.6 |
| 10.5 | 10.0 | 58.9 |
| 10.5 | 15.0 | 58.3 |
| 11.0 | 0 (blank) | 57.4 |
| 11.0 | 1.0 | 61.3 |
| 11.0 | 2.0 | 63.5 |
| 11.0 | 5.0 | 65.3 |
| 11.0 | 10.0 | 61.8 |
| 11.0 | 20.0 | 50.5 |
| 11.5 | 0 (blank) | 62.2 |
| 11.5 | 1.0 | 65.4 |
| 11.5 | 2.0 | 66.8 |
| 11.5 | 5.0 | 64.9 |
| 11.5 | 10.0 | 57.0 |
| 11.5 | 20.0 | 47.0 |
| 12.0 | 0 (blank) | 64.6 |
| 12.0 | 0.5 | 66.3 |
| 12.0 | 1.0 | 67.1 |
| 12.0 | 2.0 | 67.3 |
| 12.0 | 5.0 | 65.9 |

(continued)

| Berger Whiteness results of bleaching raw cotton using various levels of $[Mn_2(\mu\text{-}O)_3(Me_3\text{-}TACN)_2](CH_3COO)_2$ at various pH's at 75°C for 30 minutes. | | |
|---|---|---|
| **pH** | **$[Mn_2(\mu\text{-}O)_3(Me_3\text{-}TACN)_2](CH_3COO)_2$ (micromolar)** | **Whiteness (Berger)** |
| 12.0 | 10.0 | 58.0 |
| 12.0 | 20.0 | 49.6 |

The results shown in Table 2 show the following:

1. $[Mn_2(\mu\text{-}O)_3(Me_3\text{-}TACN)_2](CH_3COO)_2$ gives optimal bleaching activity using relatively high levels at pH 10.5 (about 10 microM) and pH 11.0 (about 5 microM of catalyst).

2. At higher pH (11.5 and 12.0) the bleaching activity is optimal at much lower levels of catalyst (already high activity at 2 microM at pH 11.5 and at pH 11 at 1 microM)

3. Negative results are obtained (with respect to the blanks) at high pH and high level of catalysts.

## Claims

**1.** A method of treating a substrate comprising the following step: contacting the substrate with an aqueous medium, having at least 1% of water and from 1 to 1500 mM of hydrogen peroxide, to form an oxidative medium, the aqueous medium comprising a ligand of the following form:

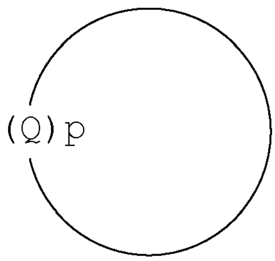 (I)

,

wherein:

Q = 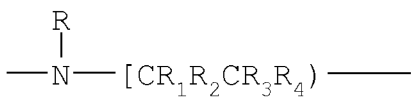 ;

p is 3;
R is independently selected from: hydrogen, C1-C6-alkyl, CH2CH2OH, and CH2COOH;
R1, R2, R3, and R4 are independently selected from: H, C1-C4-alkyl, and C1-C4-alkylhydroxy, wherein the oxidative medium has a pH in the range 11 to 13 and the concentration of the ligand is in the range from 0.001 and 5 micromol/l.

**2.** A method of treating a substrate according to claim 1, wherein the pH of the oxidative medium is from pH 11.2 to 12.8.

**3.** A method of treating a substrate according to claim 2, wherein the pH of the oxidative medium is from pH 11.5 and 12.5.

**4.** A method of treating a substrate according to claim 1 or 2, wherein the concentration of the ligand is from 0.002 to

2 micromol/l.

5. A method of treating a substrate according to any one of the preceding claims, wherein the concentration of the ligand is from 0.005 and 1 micromol/l.

6. A method of treating a substrate according to any one of the preceding claims, wherein the ligand is present as the free ligand together with a manganese salt.

7. A method of treating a substrate according to claims 6, wherein the manganese salt is present in the aqueous medium at a molar ratio of ligand to manganese ion present in the salt of between 100:1 and 0.1:1.

8. A method of treating a substrate according to any one of the claims 1 to 5, wherein the ligand is present as a preformed transition metal catalyst.

9. A method according to claim 1, wherein R1, R2, R3, and R4 are independently selected from: H and Me.

10. A method according to any one of the preceding claims, wherein the catalyst is derived from 1,4,7-Trimethyl-1,4,7-triazacyciononane ($Me_3$-TACN).

11. A method according to claim 9, wherein the preformed transition metal catalyst salt is a dinuclear Mn(III) or Mn(IV) complex with at least one $O^2$-bridge.

12. A method according to any one of the preceding claims, wherein the substrate is selected from: cellulosic substrate, crockery in a mechanical dishwasher, an effluent waste stream, starch, an alkene, an aldehyde, and an alkane.

13. A method according to claim 12, wherein the substrate is a cellulosic substrate or crockery in a mechanical dishwasher.

Europäisches Patentamt
European Patent Office
Office européen des brevets

# EUROPEAN SEARCH REPORT

Application Number
EP 09 16 2913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 458 398 A2 (UNILEVER NV [NL]; UNILEVER PLC [GB]) 27 November 1991 (1991-11-27) * page 9, line 17 - line 18; claims; example I * ----- | 1-13 | INV. D06L3/02 C11D3/39 D21C9/10 |
| A,D | R. HAGE ET AL.: "Efficient manganese catalystsfor low-temperature bleaching." NATURE, vol. 369, no. 6482, 23 June 1994 (1994-06-23), pages 637-639, XP002583369 * figure 2; table 1 * ----- | 1-13 | |
| A,D | WO 2008/086937 A2 (UNILEVER PLC [GB]; UNILEVER NV [NL]; DE ALMEIDA JOAQUIM MANUEL HENR [G) 24 July 2008 (2008-07-24) * the whole document * ----- | 1-13 | |

TECHNICAL FIELDS SEARCHED (IPC)

D06L
C11D
D21C
C07F

The present search report has been drawn up for all claims

1

| Place of search | Date of completion of the search | Examiner |
|---|---|---|
| The Hague | 21 May 2010 | Blas, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 16 2913

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2010

| Patent document cited in search report | Publication date | Patent family member(s) | Publication date |
|---|---|---|---|
| EP 0458398 A2 | 27-11-1991 | AU 622362 B2 | 02-04-1992 |
| | | AU 7712691 A | 21-11-1991 |
| | | AU 622363 B2 | 02-04-1992 |
| | | AU 7712791 A | 21-11-1991 |
| | | BR 9102085 A | 24-12-1991 |
| | | BR 9102086 A | 24-12-1991 |
| | | CA 2042736 A1 | 22-11-1991 |
| | | CA 2042738 A1 | 22-11-1991 |
| | | DE 69125309 D1 | 30-04-1997 |
| | | DE 69125309 T2 | 03-07-1997 |
| | | DE 69125310 D1 | 30-04-1997 |
| | | DE 69125310 T2 | 03-07-1997 |
| | | EP 0458397 A2 | 27-11-1991 |
| | | ES 2100924 T3 | 01-07-1997 |
| | | ES 2100925 T3 | 01-07-1997 |
| | | IN 173875 A1 | 30-07-1994 |
| | | IN 172881 A1 | 25-12-1993 |
| | | JP 2613707 B2 | 28-05-1997 |
| | | JP 6269676 A | 27-09-1994 |
| | | JP 2042652 C | 09-04-1996 |
| | | JP 4270798 A | 28-09-1992 |
| | | JP 7065074 B | 12-07-1995 |
| | | NO 911942 A | 22-11-1991 |
| | | NO 911943 A | 22-11-1991 |
| | | US 5246621 A | 21-09-1993 |
| | | US 5244594 A | 14-09-1993 |
| WO 2008086937 A2 | 24-07-2008 | AR 064890 A1 | 06-05-2009 |
| | | AU 2007344425 A1 | 24-07-2008 |
| | | CA 2670743 A1 | 24-07-2008 |
| | | CL 1052008 A1 | 05-09-2008 |
| | | CN 101589191 A | 25-11-2009 |
| | | EP 2104765 A2 | 30-09-2009 |
| | | US 2010101029 A1 | 29-04-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5516738 A
- US 5329024 A
- WO 2002088063 A
- WO 2005033070 A
- WO 2006125517 A
- WO 08086937 A
- EP 1934396 B
- EP 458397 A


### Non-patent literature cited in the description


- **R. Hage et al.** *Nature,* 1994, vol. 369, 637